# EUROPEAN PATENT SPECIFICATION

(11) **EP 3 225 517 B1**
(45) Date of publication and mention of the grant of the patent: **24.07.2019**
(21) Application number: 17159401.3
(22) Date of filing: 06.03.2017
(51) Int. Cl.: B62J 1/00, B62J 17/00, B62J 17/02, B62J 1/08, B62J 1/12, B62J 1/14, B62J 15/00

(54) **REAR PORTION STRUCTURE OF SADDLE-RIDE TYPE VEHICLE**
HINTERER KAROSSERIEAUFBAU EINES SATTELFAHRZEUGS
STRUCTURE DE PARTIE ARRIÈRE DE VÉHICULE À MONTURE À SELLE

(30) Priority: 30.03.2016 JP 2016067856
(43) Date of publication of application: 04.10.2017
(73) Proprietor: Honda Motor Co., Ltd., Minato-ku, Tokyo 107-8556 (JP)
(72) Inventor: NIIJIMA, Shun, Wako-shi, Saitama 351-0193 (JP); USA, Masanori, Wako-shi, Saitama 351-0193 (JP)
(74) Representative: Weickmann & Weickmann PartmbB

(56) References cited:
- JP-A- 2014 108 748
- JP-A- 2014 240 255

## Description

### FIELD

The present invention relates to a rear portion structure of a saddle-ride type vehicle, and more particularly to a rear portion structure of a saddle-ride type vehicle having a rear cowl which covers a rear portion of the vehicle.

### BACKGROUND

For example, JP-2014-108748-A discloses a saddle-ride type vehicle in which, as a cover member which covers a seat frame extending toward a rear side of the vehicle while supporting a riding seat, a rear seat cover which covers a surrounding of a pillion's seat is provided together with a rear fender which covers a rear wheel from above, and a pair of left and right rear cowls which covers left and right outer sides of the rear seat cover is provided. The rear cowl has projecting portions which are formed by connecting an upper surface of the rear cowl which covers an upper side of the rear seat cover and a lower surface of the rear cowl which covers a lower side of the rear seat cover and project toward the outside in a width direction of a vehicle.

However, the rear cowl disclosed in JP-2014-108748-A has the structure where the left and right rear cowls are separately formed and are mounted on a vehicle body and hence, the number of parts is increased. Further, the rear cowl is formed into a shape having projecting portions which project to the outside in the width direction of the vehicle. Still further, the upper surface and the lower surface which form the projecting portion form surfaces which vertically continue with each other via a predetermined ridge. Accordingly, in manufacturing the rear cowl by integral molding using a molding die, it is difficult to make a bent angle between the upper and the lower surfaces of the projecting portion small. As a result, due to the restriction which is imposed on the shape of the rear cowl at the time of molding, it is difficult to achieve the reduction of a weight of the rear cowl by making the bent angle between the upper surface and the lower surface small thus reducing a thickness of the projecting portion in a vertical direction.

Document JP 2014-240255 A, which is considered to be closest prior art, discloses a seat assembly comprising an upper cowl and a lower cowl configured to engage with each other.

### 1 SUMMARY

One object of the present invention to provide a rear portion structure of a saddle-ride type vehicle which can reduce the number of the parts of a rear cowl, can enhance moldability of the rear cowl, and can realize the downsizing and reduction of weight of the rear cowl.

To achieve the above-mentioned object, the invention provides following Aspects 1-5.
1. A rear portion structure of a saddle-ride type vehicle including:
   seat frames extending rearward and upward toward a rear side of the vehicle from a rear portion of a main frame;
   a riding seat supported on the seat frames and having a rider's seat and a pillion's seat disposed behind the rider's seat; and
   a rear cowl covering the seat frames and a storing space formed below the riding seat,
   characterized in that the rear cowl is formed such that an upper cowl and a lower cowl are vertically assembled to each other by a vertical connecting portion which extends along the seat frames,
   an upper connecting portion is formed on an outer periphery of the upper cowl to extend over a lateral width of the upper cowl, a lower connecting portion is formed on an outer periphery of the lower cowl to extend over a lateral width of the lower cowl, and each of the upper connecting portion and the lower connecting portion has a flat surface portion, and
   an angle made by the flat surface portion of the upper connecting portion and the flat surface portion of the lower connecting portion, which are connected to each other via the vertical connecting portion, is set to an acute angle.
2. The structure of Aspect 1,
   wherein the flat surface portion of the upper connecting portion is formed downward toward the vertical connecting portion, and
   wherein the flat surface portion of the lower connecting portion is configured to be brought into contact with a lower end of the upper connecting portion.
3. The structure of Aspect 1 or 2,
   wherein the upper connecting portion of the upper cowl includes: the flat surface portion extending obliquely and upward toward a vehicle width inside direction; an inclined portion extending obliquely and downward toward the pillion's seat via a ridge; and a bent portion extending upward below an outer peripheral portion of the pillion's seat.
4. The structure of any one of Aspects 1 to 3,
   wherein a rear fender is supported by the left and right seat frames in a latched manner to form a bottom portion of the storing space,
   wherein the bottom portion is disposed so as to cover a rear wheel from above in front of the lower cowl, and
   wherein the rear cowl is supported by the rear fender.
5. The structure of Aspect 4,
   wherein the lower cowl forms a fender lower space below the bottom portion of the rear fender, and
   wherein a regulator is disposed in the fender lower space.

According to Aspect 1, the rear cowl is configured such that the upper connecting portion of the upper cowl is formed over a lateral width of the upper cowl and the lower connecting portion of the lower cowl is formed over a lateral width of the lower cowl. Accordingly, the number of parts can be reduced compared to the configuration where the upper cowl and the lower cowl are respectively formed such that the portions on both left and right sides of the vehicle are formed as separate bodies.

The upper connecting portion formed on the outer periphery of the upper cowl and the lower connecting portion formed on the outer periphery of the lower cowl are connected by the vertical connecting portion extending along the seat frame. Accordingly, a length of the connecting portion can be increased and hence, the upper cowl and the lower cowl can be favorably connected to each other.

The rear cowl adopts the vertically split structure formed of the upper cowl and the lower cowl and hence, a height of the molding die can be made small whereby favorable moldability can be acquired.

An angle made by the flat surface portion of the upper connecting portion and the flat surface portion of the lower connecting portion is an acute angle and hence, it is possible to form the rear cowl into a thin structure where upper and lower surfaces of the rear cowl are made to approach each other whereby the downsizing and the reduction of the weight of the rear portion of the vehicle can be realized while covering the seat frames and the storing space by the rear cowl.

According to Aspect 2, the flat surface portion of the upper connecting portion is disposed downward toward the vertical connecting portion, and the flat surface portion of the lower connecting portion is configured to be brought into contact with the lower end of the upper connecting portion and hence, the exposure of the vertical connecting portion can be suppressed.

According to Aspect 3, the upper connecting portion of the upper cowl includes: the flat surface portion extending obliquely and upward toward the vehicle width inside direction; the inclined portion extending obliquely and downward toward the pillion's seat via the ridge; and the bent portion extending upward below the outer peripheral portion of the pillion's seat. Accordingly, the intrusion of water through between the pillion's seat and the upper cowl can be prevented.

According to Aspect 4, the rear cowl is supported by the rear fender which is supported by the seat frames in a latched manner and hence, the rear fender and the rear cowl are not fixed to the seat frames by screw members or the like. Accordingly, the transmission of stress between the seat frames and the member supported by the seat frames can be alleviated, and the reduction of the weight of the seat frames can be realized. The rear fender and the rear cowl are connected to each other and hence, synthetic resin parts which form the rear fender and the rear cowl can be fixed to each other whereby assembling property of the rear cowl can be enhanced.

According to Aspect 5, the lower cowl forms the fender lower space below the bottom portion of the rear fender, and the regulator which generates heat is disposed in the fender lower space on a lower side of the rear fender. Accordingly, the regulator can be disposed outside of the storing space and hence, the accumulation of heat of the regulator in the storing space can be prevented.

### BRIEF DESCRIPTION OF DRAWINGS

Fig. 1 is a right side view of a saddle-ride type vehicle according to an embodiment.
Fig. 2 is an enlarged right side view showing a rear portion of the saddle-ride type vehicle shown in Fig. 1 in an enlarged manner.
Fig. 3 is a cross-sectional view taken along a line A-A in Fig. 2.
Fig. 4 is a perspective view of a first cowl which forms an upper cowl of a rear cowl of the saddle-ride type vehicle shown in Fig. 1 as viewed from an oblique upper position.
Figs. 5A and 5B are views of the first cowl shown in Fig. 4. Fig. 5A is a left side view. Fig. 5B is a plan view.
Figs. 6A and 6B are views of a second cowl which forms an upper cowl of the rear cowl of the saddle-ride type vehicle shown in Fig. 1. Fig. 6A is a plan view. Fig. 6B is a left side view.
Fig. 7 is a perspective view of a third cowl which forms a lower cowl of the rear cowl of the saddle-ride type vehicle shown in Fig. 1 as viewed from an oblique lower position.
Figs. 8A and 8B are views of the third cowl shown in Fig. 7. Fig. 8A is a plan view. Fig. 8B is a left side view.
Fig. 9 is a perspective view of a fourth cowl which forms the lower cowl of the rear cowl of the saddle-ride type vehicle shown in Fig. 1 as viewed from an oblique lower position.
Figs. 10A and 10B are views of the fourth cowl shown in Fig. 9. Fig. 10A is a plan view. Fig. 10B is a left side view.
Fig. 11 is a main part enlarged cross-sectional view showing a portion of the structure shown in Fig. 3 in an enlarged manner.
Fig. 12 is a left side view of the saddle-ride type vehicle shown in Fig. 1 describing an assembled state between a seat frame and a rear fender and an assembled state between the rear fender and the fourth cowl.
Fig. 13 is a plan view of the saddle-ride type vehicle shown in Fig. 1 describing an assembled state between the seat frame and the rear fender.

### DETAILED DESCRIPTION

Hereinafter, a saddle-ride type vehicle according to an embodiment is described with reference to attached drawings. The drawings are viewed in the direction of symbols and, in the description made hereinafter, directions such as "front", "rear", "left", "right", "up" and "down" are described in accordance with directions as viewed from a rider. In the drawings, symbol Fr indicates a front side of the vehicle, symbol Rr indicates a rear side of the vehicle, symbol L indicates a left side of the vehicle, symbol R indicates a right side of the vehicle, symbol U indicates an upper side of the vehicle, and symbol D indicates a lower side of the vehicle.

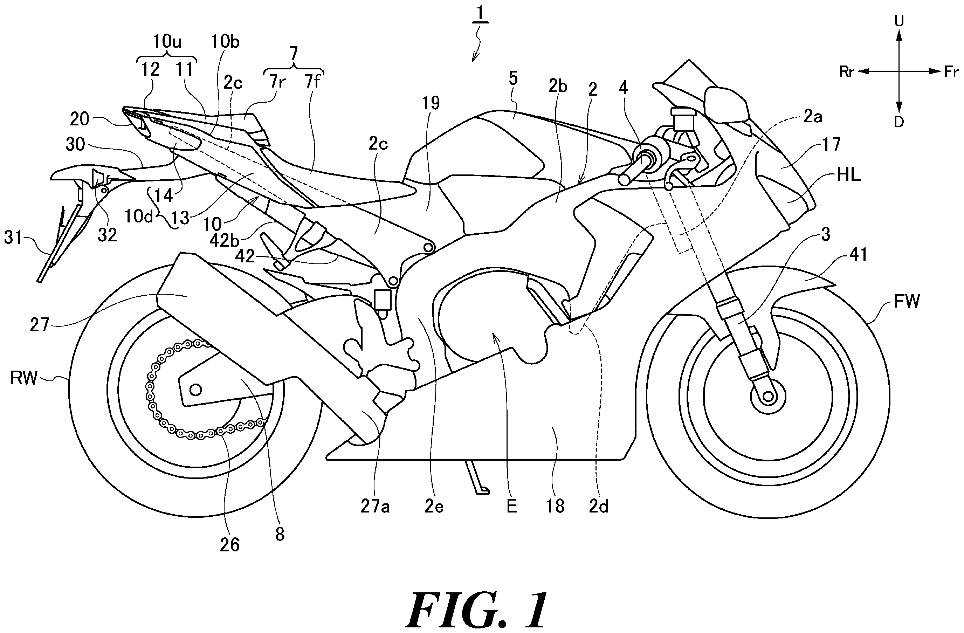

In Fig. 1, a vehicle body frame 2 of a saddle-ride type vehicle 1 which is a motorcycle includes: a head pipe 2a which steerably supports a front fork 3 pivotally supporting a front wheel FW and a handle 4; a main frame 2b which extends rearward and downward from the head pipe 2a; a pivot frame 2e which is connected to a rear portion of the main frame 2b and extends downward; a pair of left and right seat frames 2c which is connected to the pivot frame 2e and is inclined rearward and upward; and a down frame 2d which is connected to a front end portion of the main frame 2b and extends rearward and downward at a steeper angle than the main frame 2b. A drive unit E which is formed of an engine and a transmission is disposed below the main frame 2b and in front of the pivot frame 2e. The drive unit E is mounted on the vehicle body frame 2 such that the drive unit E is surrounded by the main frame 2b, the down frame 2d and the pivot frame 2e. The drive unit E is supported by a lower end portion of the down frame 2d and the pivot frame 2e.

A fuel tank 5 is mounted on the main frame 2b. A tandem-type riding seat 7 formed of a rider's seat 7f on which a rider is seated and a pillion's seat 7r is supported by the seat frame 2c behind the fuel tank 5.

A front end portion of a swing arm 8 which pivotally supports a rear wheel RW at a rear end portion thereof is swingably supported by the pivot frame 2e, and the swing arm 8 is suitably supported by a rear cushion not shown in the drawing. Power from the drive unit E is transmitted to the rear wheel RW via a chain 26 extended along the swing arm 8. An exhaust pipe 27a which passes below the seat frame 2c and extends toward a rear side of the drive unit E from a front side of the drive unit E is connected to the drive unit E, and an exhaust muffler 27 connected to the exhaust pipe 27a is disposed on a right outside of the swing arm 8.

A cover member which covers a vehicle body is formed of resin molded bodies which cover the vehicle as desired. For example, the cover member includes: a front cowl 17 which covers side surfaces of an upper portion of the front fork 3 from surrounding of a head light HL; an under cowl 18 which is continuously formed with the front cowl 17 and covers a lower portion of the drive unit E from a rear side of the front fork 3 and a front side of the drive unit E; side cowls 19 which cover an area ranging from a lower side of the fuel tank 5 and a lower side of a front portion of the rider's seat 7f to upper portions of the main frame 2b and the seat frame 2c; a rear cowl 10 which is disposed on a rear portion of the vehicle such that the rear cowl 10 covers the surrounding area of a tail light 20 while surrounding side surfaces and a lower surface of the seat frame 2c from below a rear portion of the rider's seat 7f; a front fender 41 which covers the front wheel FW from above; and a rear fender 42 which covers the rear wheel RW from above.

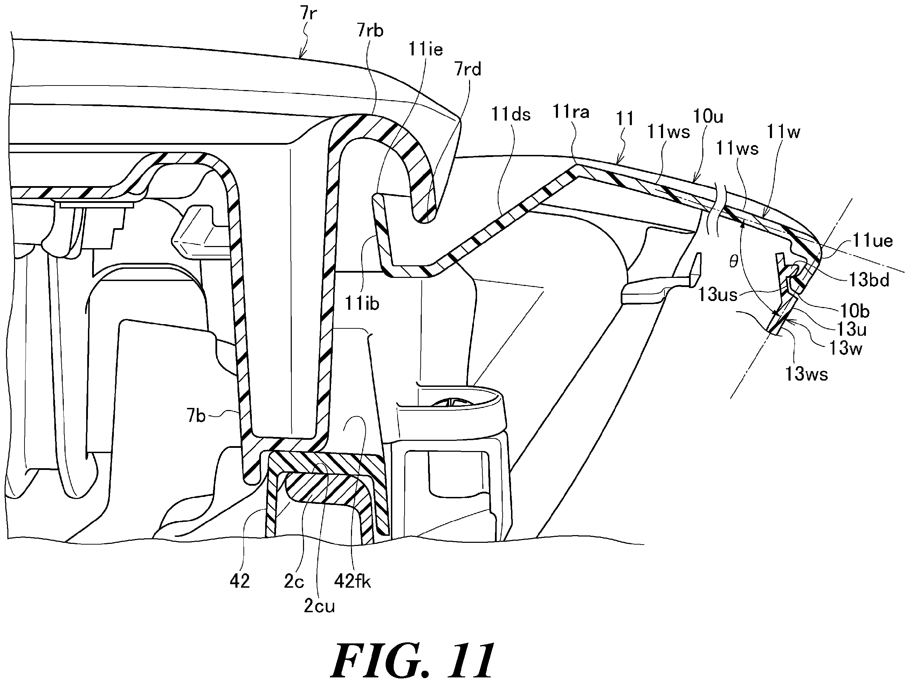

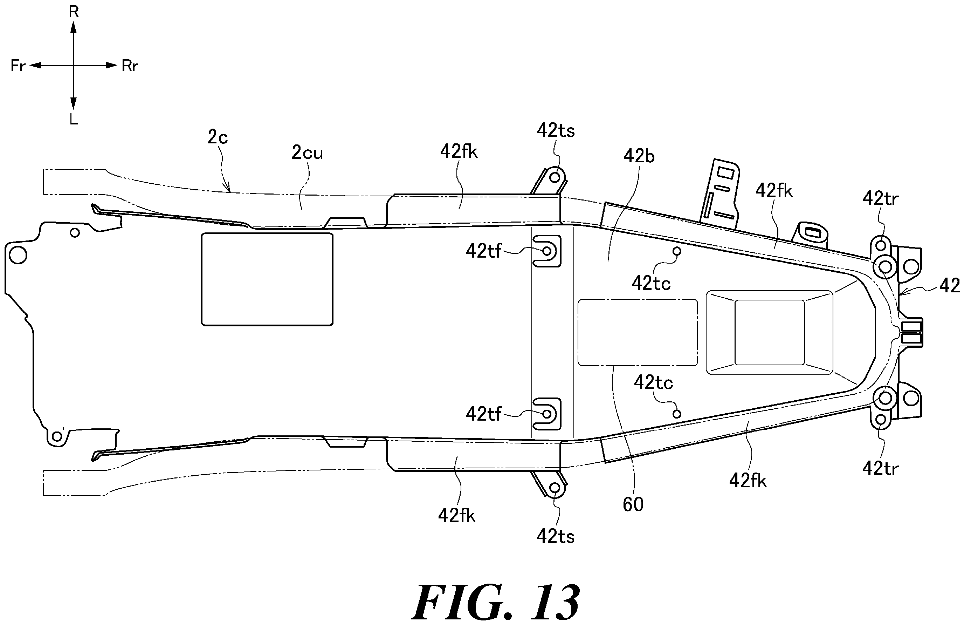

As shown in Fig. 11 and Fig. 13, the rear fender 42 is supported by the seat frame 2c in a latched manner, and the position of the rear fender 42 in the longitudinal direction of the vehicle and in the lateral direction of the vehicle is restricted with respect to the seat frame 2c without using fixing members such as screws. That is, the rear fender 42 has placing portions 42fk which are caught by upper surfaces 2cu of the seat frames 2c. The placing portions 42fk are portions disposed on both left and right sides of the rear fender 42 ranging from a middle portion to a rear portion of the rear fender 42 in the longitudinal direction. Each placing portion 42fk is formed in a hook shape such that the placing portion 42fk extends upward from a lower position along an inner side of the seat frame 2c, passes over the upper surface 2cu, and extends downward along an outer side of the seat frme 2c.

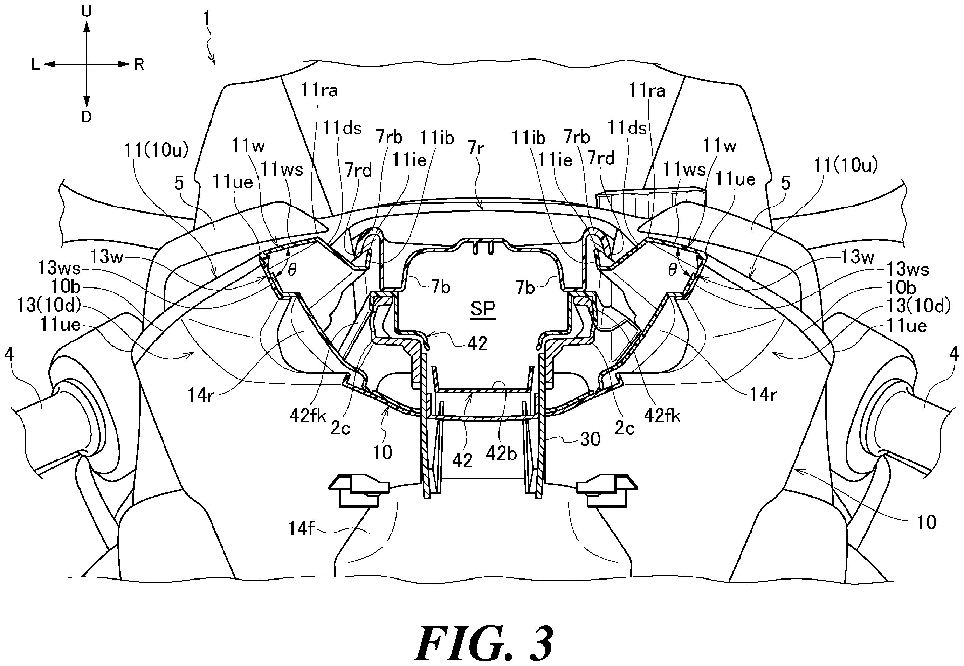

The riding seat 7 is placed on the rear fender 42 placed on the seat frames 2c (see Fig. 3). To be more specific, as shown in Fig. 11, the seat base portions 7b of the riding seat 7 are placed on the placing portions 42fk formed on both sides of the rear fender 42.

The tail light 20 is supported by the rear end of the rear fender 42. A license stay 30 is supported as desired by the seat frames 2c on a lower side of the tail light 20 such that the license stay 30 is supported and extends toward a rear side in the longitudinal direction of the vehicle, and a license plate 31 and the blinker 32 are supported on a rear end of the license stay 30.

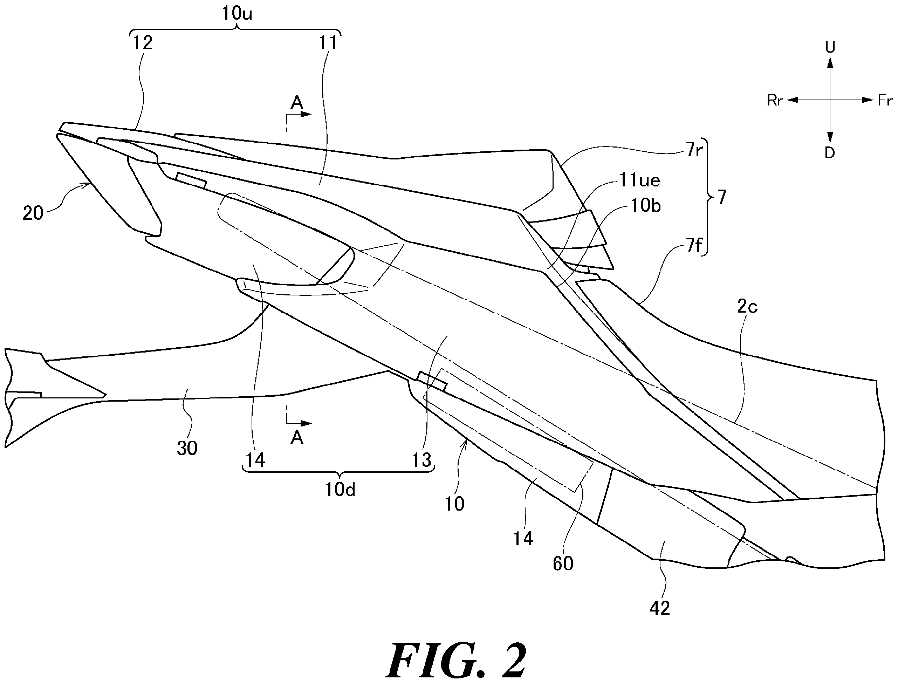

As shown in Fig. 2, to roughly classify the rear cowl 10, the above-mentioned rear cowl 10 is formed of an upper cowl 10u on an upper side and the lower cowl 10d on a lower side. The upper cowl 10u extends from a lower side of a rear portion of the rider's seat 7f to a rear side of the pillion's seat 7r so as to cover upper surfaces of the seat frames 2c. The low cowl 10d is formed so as to cover lower surfaces and side surfaces of the seat frames 2c. The upper cowl 10u and the lower cowl 10d are vertically assembled along a vertical connecting portions 10b which extend in the longitudinal direction.

With reference to Fig. 3, a storing space SP is formed below the pillion's seat 7r between the left and right seat frames 2c. That is, the storing space SP in which electrical components and the like are stored is formed such that left and right outer sides, an upper side, a lower side of the seat frames 2c are covered by the riding seat 7, the rear cowl 10 and the rear fender 42. The rear fender 42 is supported in a state where the rear fender 42 is latched to the left and right seat frames 2c. The rear fender 42 forms a bottom portion 42b of the storing space SP. The bottom portion 42b is formed so as to cover the rear wheel RW from above in front of the lower cowl 10d (see Fig. 1).

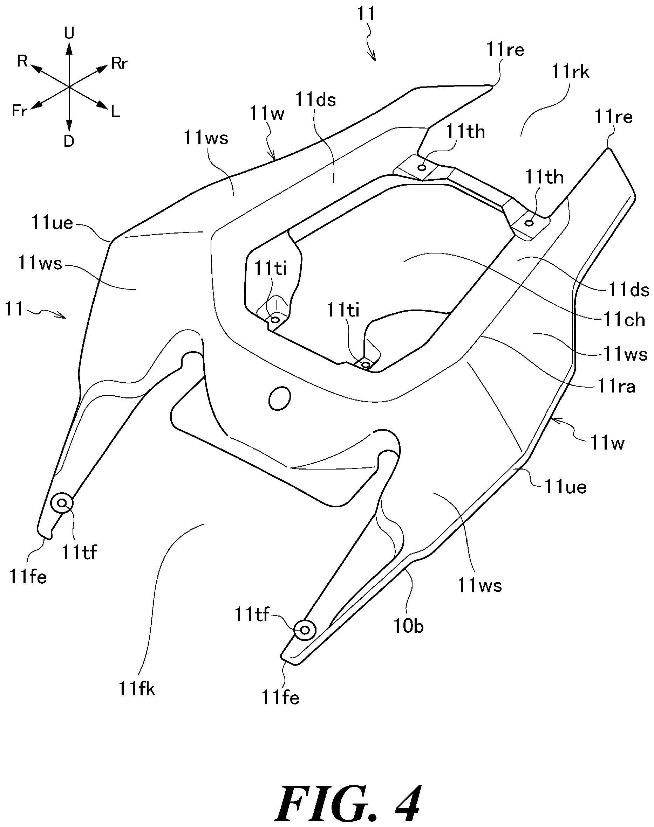

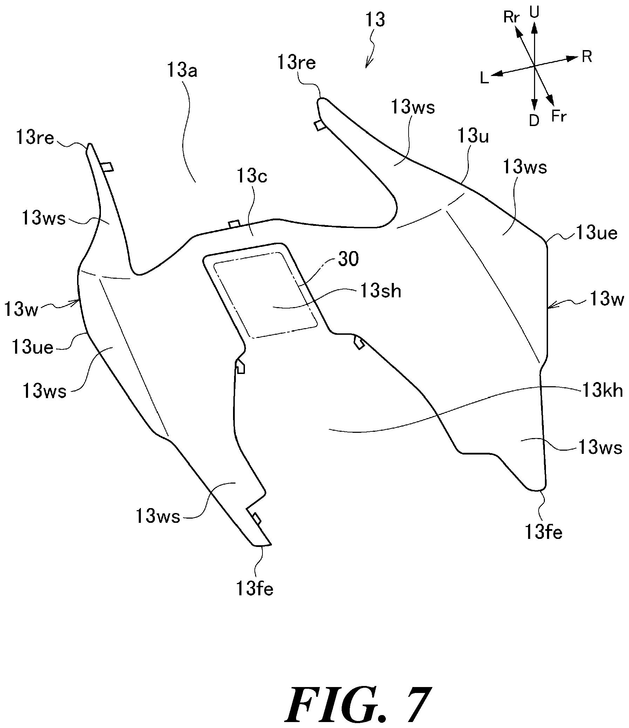

Hereinafter, the upper cowl 10u and the lower cowl 10d which form the rear cowl 10 are described with reference to Fig. 4 to Fig. 10B. The upper cowl 10u is shown in Fig. 4 to Fig. 6B, and the lower cowl 10d is shown in Fig. 7 to Fig. 10B.

The upper cowl 10u includes a first cowl 11, and a second cowl 12 connected to a rear side of the first cowl 11.

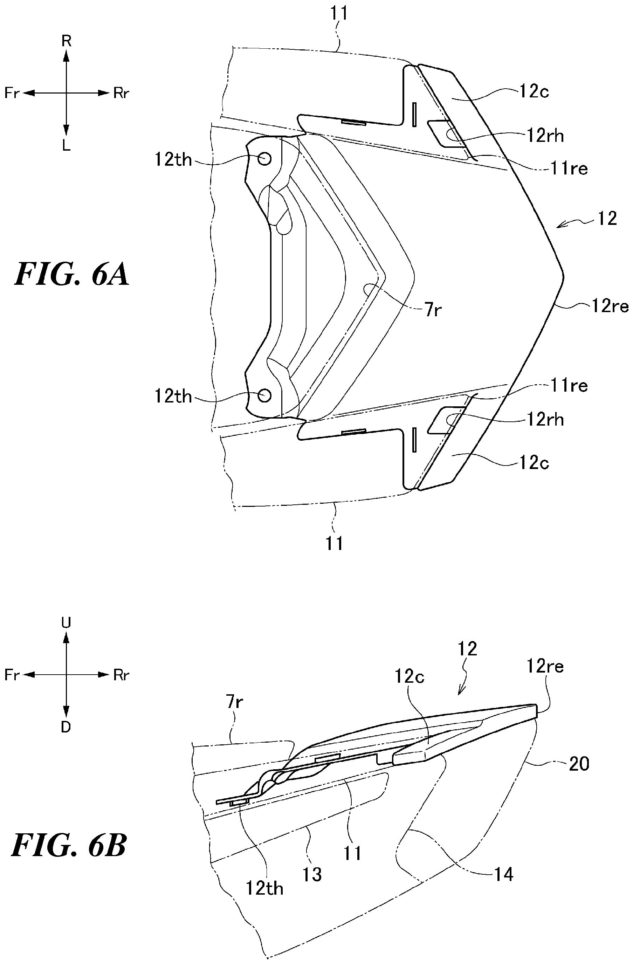

As shown in Fig. 4, the first cowl 11 has: a front notched portion 11fk which is notched such that the front notched portion 11fk largely opens toward a front side; and a rear notched portion 11rk which is notched toward a rear side such that the rear notched portion 11rk opens smaller than the front notched portion 11fk. A center opening 11ch is formed in the first cowl 11 between the notched portions 11fk, 11rk disposed on front and rear sides in the longitudinal direction of the vehicle. The first cowl 11 has the left-and-right symmetrical structure and is formed by integral molding. A rear portion of the rider's seat 7f is placed on the front notched portion 11fk such that the rear portion of the rider's seat 7f closes the front notched portion 11fk. The pillion's seat 7r is placed on the center opening 11ch such that the pillion's seat 7r closes the center opening 11ch. The second cowl 12 (see Fig. 6A) described later is mounted on the rear notched portion 11rk such that the second cowl 12 closes the rear notched portion 11rk.

Left and right outermost portions 11ue of the first cowl 11 project toward left and right outermost sides of the rear cowl 10 in the vehicle width direction, and the first cowl 11 forms a main part of the upper cowl 10u compared to the small second cowl 12 which only covers the rear notched portion 11rk.

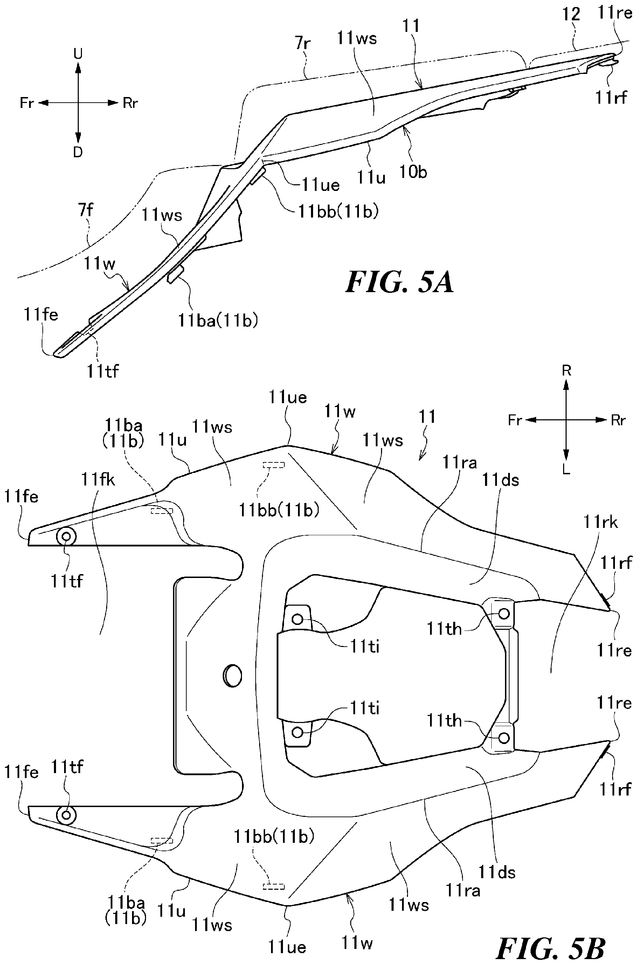

As shown in Fig. 5A, the first cowl 11 includes: a steeply inclined portion where front ends 11fe disposed on both left and right sides of the front notched portion 11fk are positioned below the rear portion of the rider's seat 7f and the steeply inclined portion is steeply inclined rearward and upward to a middle portion in the longitudinal direction of the vehicle from the front ends 11fe; and a gently inclined portion where a portion which corresponds to the pillion's seat 7r is gently inclined rearward and upward toward rear ends 11re from the middle portion in the longitudinal direction of the vehicle.

As shown in Fig. 5B, the first cowl 11 is configured such that a width of the first cowl 11 is gradually increased toward a rear side from the front ends 11fe to the left and right outermost portions 11ue while setting the left and right outermost portions 11ue which project most largely toward both left and right sides as portions which define a largest width in the lateral direction, and the width of the first cowl 11 is gradually narrowed while suitably bent toward left and right rear ends 11re on a rear side from the left and right outermost portions 11ue. In this manner, the first cowl 11 is a plate-like member which is formed by connecting upper connecting portions 11w which includes a plurality of flat surface portions 11ws extending in the longitudinal direction while expanding laterally to each other laterally.

On vertically connecting portions 10b of the first cowl 11 which extend along the seat frames 2c, upper engaging portions 11b which engage with lower engaging portions 13b of a third cowl 13 described later are formed. A plurality of upper engaging portions 11b are formed on an inner side of the upper connecting portions 11w along an outer periphery of the first cowl 11. To be more specific, the upper engaging portion 11b has, for example, two hook-shaped upper connecting engaging portions 11ba, 11bb which extend in the longitudinal direction of the vehicle along the outer periphery of the first cowl 11 on a front side (on a more front side than the left and right outermost portions 11ue).

The hook-shaped upper connecting engaging portions 11ba, 11bb are formed into a so-called hook shape such that the upper connecting engaging portions 11ba, 11bb project downward approximately orthogonal to the upper connecting portions 11w and front end portions of the upper connecting engaging portions 11ba, 11bb extend frontward.

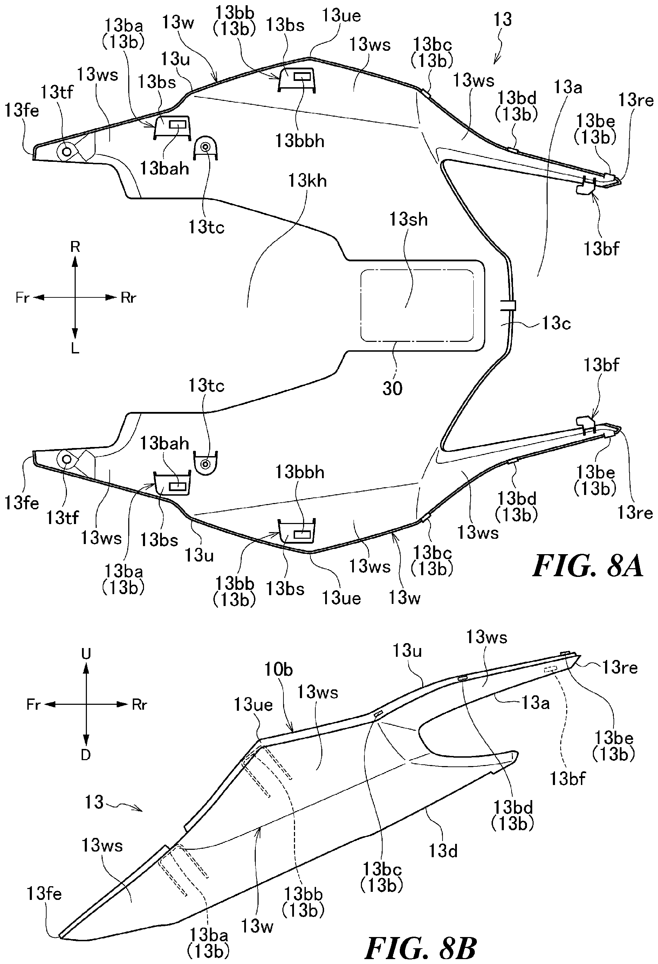

In the first cowl 11, first front support portions 11tf formed adjacently to the front ends 11fe on both left and right sides are fixed to third front support portions 13tf of a third cowl 13 of the lower cowl 10d described later (see Figs. 8A and 8B). First intermediate support portions 11ti formed on an inner side of the center opening 11ch are supported by a cross member which is formed on the seat frames 2c.

As shown in Figs. 6A and 6B, and as described previously, the second cowl 12 is a plate-like member which is configured to close the rear notched portion 11rk of the first cowl 11. To be more specific, projecting portions 12c which project toward left and right sides are formed on a rear end portion of the second cowl 12, and a rear end edge 12re including the projecting portion 12c is formed into a shape where the rear end edge 12re is inclined toward both left and right sides and toward a front side such that a center of the rear end edge 12re in a width direction forms a top rear end. Front connecting portions 12th which are connected to the rear connecting portions 11th of the first cowl 11 are formed on both left and right sides of a front end portion of the second cowl 12. The second cowl 12 is assembled such that the projecting portions 12c are brought into contact with the rear ends 11re of the first cowl 11 and cover rear surfaces of the rear ends 11re. Recessed portions 12rh which are indented toward a rear side are formed on front surface sides of the projecting portions 12c, and engaging projections 11rf (see Fig. 5A) formed on the rear ends 11re of the first cowl 11 engage with the recessed portions 12rh.

As shown in Fig. 6B, the second cowl is configured such that the rear end edge 12re covers an upper edge of the tail light 20.

The lower cowl 10d includes a third cowl 13 and a fourth cowl 14 which are vertically assembled to each other. That is, the lower cowl 10d has the structure where the fourth cowl 14 closes the notched portions 11fk, 11rk formed in the front portion and the rear portion of the third cowl 13 described later by assembling the third cowl 13 and the fourth cowl 14 to each other such that the fourth cowl 14 overlaps with the third cowl 13.

As shown in Fig. 7, the third cowl 13 is formed into a curved shape such that the third cowl 13 projects toward a lower side in transverse cross section. The third cowl 13 has: a front notched portion 13kh which is notched such that the front notched portion 13kh largely opens toward a front side; and a U-shaped recessed portion 13a which is formed such that the U-shaped recessed portion 13a opens toward a rear side with a size smaller than a size of the front notched portion 13kh. The third cowl 13 is formed into a shape where lower cowl outer peripheral portions 13u which form left and right outer peripheries correspond to an upper cowl outer peripheral portions 11u which form left and right outer peripheries of the first cowl 11. That is, third cowl front ends 13fe disposed on both left and right sides of the front notched portion 13kh opposedly face the front ends 11fe of the first cowl 11, and a width of the third cowl 13 is gradually increased in a width direction as the third cowl 13 extends rearward such that left and right outermost portions 13ue of the third cowl 13 opposedly face the left and right outermost portions 11ue of the first cowl 11, and the width of the third cowl 13 is gradually decreased as the third cowl 13 extends from the left and right outermost portions 13ue of the third cowl 13 to the rear ends 13re of the third cowl 13.

The third cowl 13 is formed into a left-and-right symmetrical shape where left and right portions of the third cowl 13 are connected to each other by a third cowl connecting portion 13c left between the front notched portion 13kh and the U-shaped recessed portion 13a in a state where the third cowl connecting portion 13c covers lower sides of the seat frames 2c. As viewed in a side view, the U-shaped recessed portion 13a has an approximately U shape formed by deeply cutting the third cowl 13 toward a front side from the rear ends 13re of the third cowl 13 (see Fig. 8B).

As viewed in a plan view, the front notched portion 13kh has a large opening width on a front side thereof, and has a rectangular hole 13sh on a rear side thereof. An opening width of the rectangular hole 13sh is set narrower than an opening width on the front side of the front notched portion 13kh. A license stay 30 is inserted into the rectangular hole 13sh. In this manner, the third cowl 13 is a plate-like member which is formed by laterally connecting the lower connecting portions 13w each of which includes a plurality of flat surface portions 13ws extending in the longitudinal direction of the vehicle while increasing a width in the lateral direction. As shown in Fig. 8B, as viewed in a side view, a lower cowl outer peripheral portion 13u forms the vertically connecting portion 10b in cooperation with an upper cowl outer peripheral portion 11u of the first cowl 11, and a lower edge 13d is inclined rearward and upward toward a rear side of the vehicle such that the lower edge 13d is positioned below the seat frame 2c. Along the lower cowl outer peripheral portion 13u, a lower engaging portion 13b which overlaps with the upper engaging portion 11b of the above-mentioned first cowl 11 from a lower side is disposed.

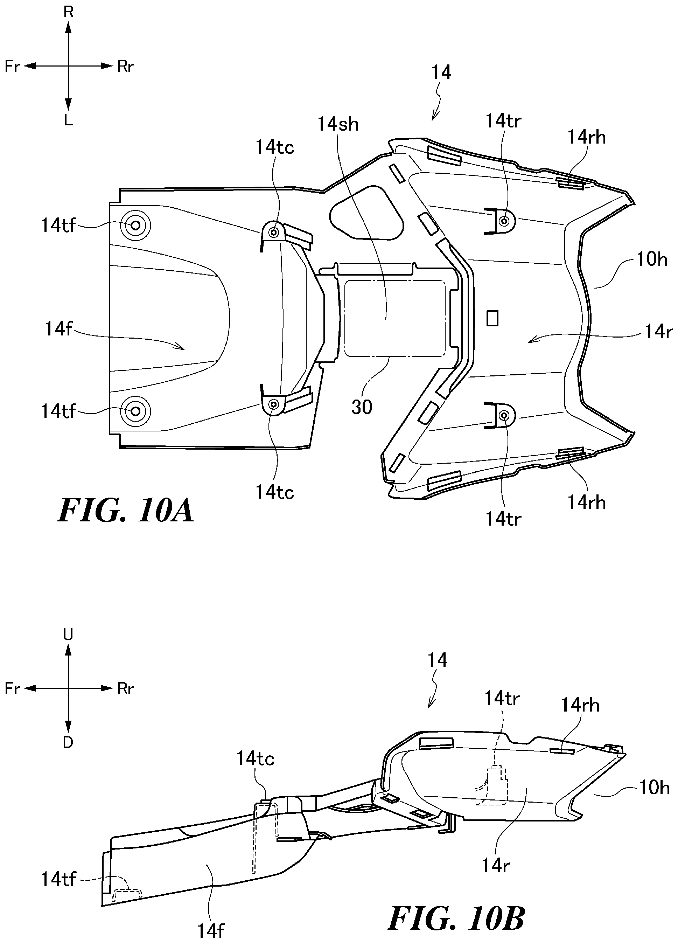

The lower engaging portion 13b engages with the upper engaging portion 11b of the first cowl 11. To be more specific, the lower engaging portion 13b includes lower connecting engaging portions 13ba, 13bb which correspond to the above-mentioned two hook-type upper connecting engaging portions 11ba, 11bb (see Figs. 5A and 5B) which form the upper engaging portion 11b. In the third cowl 13, the lower connecting engaging portions 13ba, 13bb project toward the vertical connecting portions 10b, reach a height of the vertical connecting portions 10b, and form flat surfaces 13bs on upper ends of the vertical connecting portions 10b (see Fig. 8A). Rectangular engaging holes 13bah, 13bbh which are elongated in the longitudinal direction are formed in the flat surfaces 13bs. On a rear side of the lower connecting engaging portions 13bb, three connecting engaging projections 13bc, 13bd, 13be are formed in a projecting manner on a lower cowl outer peripheral portion 13u which approximately traces the vertical connecting portion 10b at suitable intervals. Hook-type engaging portions 13bf which engage with engaging hole portions 14rh of the fourth cowl 14 (see Figs. 10A and 10B) are formed in a projecting manner on an inner surface of the third cowl 13 in the vicinity of the connecting engaging projections 13be.

In the third cowl 13, as described previously, the third front support portions 13tf of the front portion are fixed to the first front support portions 11tf of the first cowl 11, and third intermediate support portions 13tc disposed behind the third front support portions 13tf are fixed to fender left and right support portions 42ts of the rear fender 42.

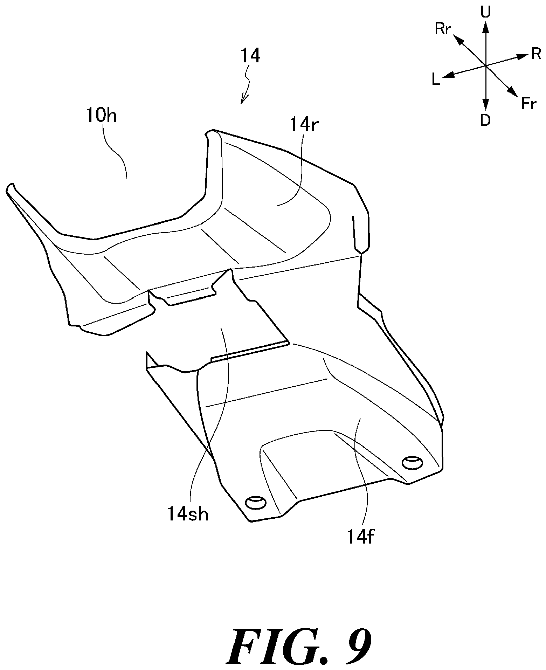

As shown in Fig. 9, the fourth cowl 14 has the structure by which the front notched portion 13kh and the U-shaped recessed portion 13a (see Fig. 7) of the third cowl 13 are closed. To be more specific, the fourth cowl 14 includes: a front exposed portion 14f which closes the front notched portion 13kh while making a front side of the front notched portion 13kh bulge downward; a side directional notched portion 14sh which corresponds to the rectangular hole 13sh and opens a left side thereof; and a rear exposed portion 14r which closes the U-shaped recessed portion 13a while leaving an opening 10h for mounting the tail light 20. The side directional notched portion 14sh forms a through portion through which the license stay 30 passes in cooperation with the rectangular hole 13sh.

In the fourth cowl 14, fourth support portions 14tf, fourth intermediate support portions 14tc and fourth rear support portions 14tr which are mounted on both left and right sides of a front portion, a middle-stage portion and a rear portion are fixed to the fender front support portions 42tc, the fender intermediate support portions 42tc and the fender rear support portions 42tr of the rear fender 42 respectively. The license stay 30 is co-fastened together with the fourth rear support portions 14tr and the fender rear support portions 42tr, and is fixed to the rear fender 42 and the lower cowl 10d.

The upper cowl 10u and the lower cowl 10d formed as described above are made to overlap with each other in the vertical direction at the vertical connecting portions 10b by making the upper engaging portions 11b of the first cowl 11 and the lower engaging portions 13b of the third cowl 13 engage with each other. In overlapping the upper cowl 10u and the lower cowl 10d at the vertical connecting portion 10b, the connecting engaging projections 13bc, 13bd, 13be are brought into contact with an inner side of an outer peripheral portion of the first cowl 11. At this stage of the operation, the hook-type upper connecting engaging portions 11ba, 11bb are inserted into the engaging holes 13bah, 13bbh of the lower connecting engaging portions 13ba, 13bb. Accordingly, for example, by shifting the first cowl 11 toward a front side, the hook-type upper connecting engaging portions 11ba, 11bb are latched and locked to the engaging holes 13bah, 13bbh.

Returning to Fig. 3, in a state where the upper cowl 10u and the lower cowl 10d are assembled to each other at the vertical connecting portions 10b, an angle θ made by the flat surface portion 11ws of the upper connecting portion 11w and the flat surface portion 13ws of the lower connecting portion 13w is set to an acute angle.

As shown in Fig. 11, the upper connecting portion 11w of the upper cowl 10u includes: a flat surface portion 11ws extending obliquely and upward toward a vehicle width inside direction; an inclined portion 11ds extending obliquely and downward toward the pillion's seat 7r via a ridge 11ra; and a bent portion 11ib extending upward below an outer peripheral portion 7rb of the pillion's seat 7r. In this embodiment, the bent portion 11ib extends such that an upper end 11ie of the bent portion 11ib is positioned above a seat outer peripheral lower end 7rd of the pillion's seat 7r. The upper cowl outer peripheral portion 11u of the first cowl 11 and the lower cowl outer peripheral portion 13u of the third cowl 13 are configured such that an upper edge portion 13us of the lower cowl outer peripheral portion 13u enters the inside of the upper cowl outer peripheral portion 11u.

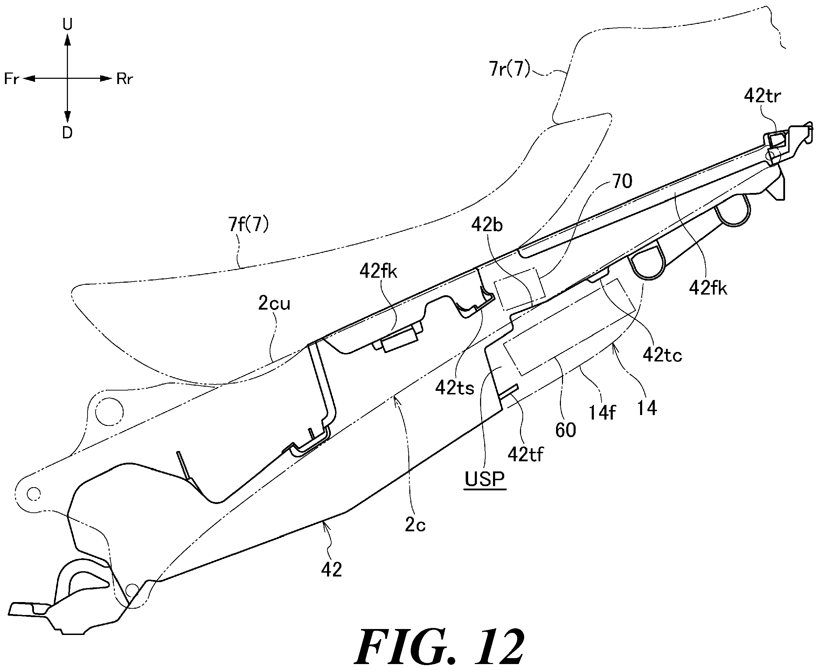

The fourth cowl 14 of the lower cowl 10d is mounted on the rear fender 42 as described previously. In such a configuration, as shown in Fig. 12, a front exposed portion 14f the fourth cowl 14 is mounted such that the front exposed portion 14f of the fourth cowl 14 forms a fender lower space USP below the bottom portion 42b of the rear fender 42. That is, the fender lower space USP is formed by combining the front exposed portion 14f to a raised portion of the bottom portion 42b of the rear fender 42 formed by forming a stepped portion on the bottom portion 42b. Accordingly, the fender lower space USP is a space isolated from the storing space SP by the bottom portion 42b. A regulator 60 is disposed in the fender lower space USP. An ECU 70 is disposed in the storing space SP above the fender lower space USP.

As has been described heretofore, according to the saddle-ride type vehicle 1 of this embodiment, the rear cowl 10 is configured such that the upper connecting portion 11w of the upper cowl 10u is formed over a lateral width of the upper cowl 10u and the lower connecting portion 13w of the lower cowl 10d is formed over a lateral width of the lower cowl 10d. Accordingly, the number of parts can be reduced compared to the configuration where the upper cowl 10u and the lower cowl 10d are respectively formed such that the portions on both left and right sides of the vehicle are formed as separate bodies.

The upper connecting portion 11w formed on the outer periphery of the upper cowl 10u and the lower connecting portion 13w formed on the outer periphery of the lower cowl 10d are connected by the vertical connecting portion 10b extending along the seat frame 2c. Accordingly, a length of the connecting portion can be increased and hence, the upper cowl 10u and the lower cowl 10d can be favorably connected to each other.

The rear cowl 10 adopts the vertically split structure formed of the upper cowl 10u and the lower cowl 10d and hence, a height of the molding die can be made small whereby favorable moldability can be acquired.

An angle made by the flat surface portion 11ws of the upper connecting portion 11w and the flat surface portion 13ws of the lower connecting portion 13w is an acute angle and hence, it is possible to form the rear cowl 10 into a thin structure where upper and lower surfaces of the rear cowl 10 are made to approach each other whereby the downsizing and the reduction of the weight of the rear portion of the vehicle can be realized while covering the seat frame 2c and the storing space SP by the rear cowl 10.

The flat surface portion 11ws of the upper connecting portion 11w is disposed downward toward the vertical connecting portion 10b, and the flat surface portion 13ws of the lower connecting portion 13w is brought into contact with the lower end of the upper connecting portion 11w and hence, the exposure of the vertical connecting portion 10b can be suppressed.

The upper connecting portion 11w of the upper cowl 10u includes: the flat surface portion 11ws extending obliquely and upward toward the vehicle width inside direction; the inclined portion 11ds extending obliquely and downward toward the pillion's seat 7r via the ridge 11ra; and the bent portion 11ib extending upward below the outer peripheral portion 7rb of the pillion's seat 7r. Accordingly, the intrusion of water through between the pillion's seat 7r and the upper cowl 10u can be prevented.

The rear cowl 10 is supported by the rear fender 42 which is supported by the seat frame 2c in a latched manner and hence, the rear fender 42 and the rear cowl 10 are not fixed to the seat frame 2c by screw members or the like. Accordingly, the transmission of stress between the seat frame 2c and the member supported by the seat frame 2c can be alleviated, and the reduction of the weight of the seat frame 2c can be realized. The rear fender 42 and the rear cowl 10 are connected to each other and hence, synthetic resin parts which form the rear fender 42 and the rear cowl 10 can be fixed to each other whereby assembling property of the rear cowl 10 can be enhanced.

The lower cowl 10d forms the fender lower space USP below the bottom portion 42b of the rear fender42, and the regulator 60 which generates heat is disposed in the fender lower space USP on a lower side of the rear fender 42. Accordingly, the regulator 60 can be disposed outside of the storing space SP and hence, the accumulation of heat of the regulator 60 in the storing space SP can be prevented.

The present invention is not limited to the above-mentioned embodiment and the present invention can be modified or improved as desired.

In this embodiment, the description has been made with respect to the motorcycle. However, the present invention is also applicable to other saddle-ride type vehicle.
One embodiment provides a rear portion structure of a saddle-ride type vehicle. The structure includes: seat frames extending rearward and upward from a main frame; a riding seat supported on the seat frames; and a rear cowl covering the seat frames. The rear cowl is formed such that an upper cowl and a lower cowl are vertically assembled to each other by a vertical connecting portion. An upper connecting portion is formed on the upper cowl to extend over a lateral width of the upper cowl, a lower connecting portion is formed on the lower cowl to extend over a lateral width of the lower cowl, and each of them has a flat surface portion. An angle made by the flat surface portions is set to an acute angle.

## Claims

1. A rear portion structure of a saddle-ride type vehicle (1) including:
seat frames (2c) extending rearward and upward toward a rear side of the vehicle from a rear portion of a main frame (2b);
a riding seat (7) supported on the seat frames (2c) and having a rider's seat (7f) and a pillion's seat (7r) disposed behind the rider's seat (7f); and
a rear cowl (10) covering the seat frames (2c) and a storing space (SP) formed below the riding seat (7),
**characterized in that** the rear cowl (10) is formed such that an upper cowl (10u) and a lower cowl (10d) are vertically assembled to each other by a vertical connecting portion (10b) which extends along the seat frames (2c),
an upper connecting portion (11w) is formed on an outer periphery of the upper cowl (10u) to extend over a lateral width of the upper cowl (10u), a lower connecting portion (13w) is formed on an outer periphery of the lower cowl (10d) to extend over a lateral width of the lower cowl (10d), and each of the upper connecting portion (11w) and the lower connecting portion (13) has a flat surface portion (11ws, 13ws), and
an angle made by the flat surface portion (11ws) of the upper connecting portion (11w) and the flat surface portion (13ws) of the lower connecting portion (13w), which are connected to each other via the vertical connecting portion (10b), is set to an acute angle.

2. The structure of Claim 1,
wherein the flat surface portion (11ws) of the upper connecting portion (11w) is formed downward toward the vertical connecting portion (10b), and
wherein the flat surface portion (13ws) of the lower connecting portion (13w) is configured to be brought into contact with a lower end of the upper connecting portion (11w).

3. The structure of Claim 1 or 2,
wherein the upper connecting portion (11w) of the upper cowl (10u) includes: the flat surface portion (11ws) extending obliquely and upward toward a vehicle width inside direction; an inclined portion (11ds) extending obliquely and downward toward the pillion's seat (7r) via a ridge (11ra); and a bent portion (11ib) extending upward below an outer peripheral portion (7rb) of the pillion's seat (7r).

4. The structure of any one of Claims 1 to 3,
wherein a rear fender (42) is supported by the left and right seat frames (2c) in a latched manner to form a bottom portion (42b) of the storing space (SP),
wherein the bottom portion (42b) is disposed so as to cover a rear wheel (RW) from above in front of the lower cowl (10d), and
wherein the rear cowl (10) is supported by the rear fender (42).

5. The structure of Claim 4,
wherein the lower cowl (10d) forms a fender lower space (USP) below the bottom portion (42b) of the rear fender (42), and
wherein a regulator (60) is disposed in the fender lower space (USP).

## Patentansprüche

1. Heckabschnitt-Struktur eines Fahrzeugs vom Sattelfahrtyp (1), umfassend:
Sitzrahmen (2c), welche sich in Richtung einer hinteren Seite des Fahrzeugs von einem Heckabschnitt eines Hauptrahmens (2b) nach hinten und nach oben erstrecken;
einen Fahrsitz (7), welcher an den Sitzrahmen (2c) gehaltert ist und einen Fahrersitz (7f) und einen Soziussitz (7r) aufweist, welcher hinter dem Fahrersitz (7f) angeordnet ist; und
eine hintere Verkleidung (10), welche die Sitzrahmen (2c) und einen Aufnahmeraum (SP) bedeckt, welcher unter dem Fahrsitz (7) gebildet ist,
**dadurch gekennzeichnet, dass** die hintere Verkleidung (10) derart gebildet ist, dass eine obere Verkleidung (10u) und eine untere Verkleidung (10d) vertikal aneinander durch einen vertikalen Verbindungsabschnitt (10b) angeordnet sind, welcher sich entlang der Sitzrahmen (2c) erstreckt,
ein oberer Verbindungsabschnitt (11w) an einem äußeren Umfang der oberen Verkleidung (10u) gebildet ist, um sich über eine laterale Breite der oberen Verkleidung (10u) zu erstrecken, ein unterer Verbindungsabschnitt (13w) an einem äußeren Umfang der unteren Verkleidung (10d) gebildet ist, um sich über eine laterale Breite der unteren Verkleidung (10d) zu erstrecken, und jeder aus dem oberen Verbindungsabschnitt (11w) und dem unteren Verbindungsabschnitt (13) einen ebenen Flächenabschnitt (11ws, 13ws) aufweist, und ein Winkel, welcher durch den ebenen Flächenabschnitt (11ws) des oberen Verbindungsabschnitts (11w) und den ebenen Flächenabschnitt (13ws) des unteren Verbindungsabschnitts (13w) erzeugt ist, welche miteinander über den vertikalen Verbindungsabschnitt (10b) verbunden sind, auf einen spitzen Winkel festgelegt ist.

2. Struktur nach Anspruch 1,
wobei der ebene Flächenabschnitt (11ws) des oberen Verbindungsabschnitts (11w) in Richtung des vertikalen Verbindungsabschnitts (10b) nach unten gebildet ist, und
wobei der ebene Flächenabschnitt (13ws) des unteren Verbindungsabschnitts (13w) dazu eingerichtet ist, mit einem unteren Ende des oberen Verbindungsabschnitts (11w) in Kontakt gebracht zu werden.

3. Struktur nach Anspruch 1 oder 2,
wobei der obere Verbindungsabschnitt (11w) der oberen Verkleidung (10u) umfasst:
den ebenen Flächenabschnitt (11ws), welcher sich schräg und in Richtung einer Innenseite der Fahrzeugbreitenrichtung nach oben erstreckt; einen geneigten Abschnitt (11ds), welcher sich schräg und in Richtung des Soziussitzes (7r) über eine Rippe (11ra) nach unten erstreckt; und einen gebogenen Abschnitt (11ib), welcher sich unter einem äußeren Umfangsabschnitt (7rb) des Soziussitzes (7r) nach oben erstreckt.

4. Struktur nach einem der Ansprüche 1 bis 3,
wobei ein hinterer Kotflügel (42) durch die linken und rechten Sitzrahmen (2c) in einer eingeklinkten Weise gehaltert ist, um einen unteren Abschnitt (42b) des Aufnahmeraums (SP) zu bilden, wobei der untere Abschnitt (42b) angeordnet ist, um ein hinteres Rad (RW) von oben vor der unteren Verkleidung (10d) zu bedecken, und wobei die hintere Verkleidung (10) durch den hinteren Kotflügel (42) gehaltert ist.

5. Struktur nach Anspruch 4,
wobei die untere Verkleidung (10d) einen unteren Kotflügelraum (USP) unter dem unteren Abschnitt (42b) des hinteren Kotflügels (42) bildet, und
wobei ein Regulator (60) in dem unteren Kotflügelraum (USP) angeordnet ist.

## Revendications

1. Structure de partie arrière d'un véhicule de type à selle (1) comprenant :
des bâtis de selle (2c) s'étendant vers l'arrière et vers le haut vers un côté arrière du véhicule à partir d'une partie arrière d'un bâti principal (2b) ;
une selle (7) supportée sur les bâtis de selle (2c) et ayant une selle de conducteur (7f) et une selle de passager (7r) disposée derrière la selle de conducteur (7f) ; et
un capot arrière (10) recouvrant les bâtis de selle (2c) et un espace de rangement (SP) formé au-dessous de la selle (7),
**caractérisée en ce que** le capot arrière (10) est formé de sorte qu'un capot supérieur (10u) et un capot inférieur (10d) sont verticalement assemblés entre eux par une partie de raccordement verticale (10b) qui s'étend le long des bâtis de selle (2c),
une partie de raccordement supérieure (11w) est formée sur une périphérie externe du capot supérieur (10u) pour s'étendre sur une largeur latérale du capot supérieur (10u), une partie de raccordement inférieure (13w) est formée sur une périphérie externe du capot inférieur (10d) pour s'étendre sur une largeur latérale du capot inférieur (10d), et chacune parmi la partie de raccordement supérieure (11w) et la partie de raccordement inférieure (13) a une partie de surface plate (11ws, 13 ws), et
un angle réalisé par la partie de surface plate (11ws) de la partie de raccordement supérieure (11w) et la partie de surface plate (13ws) de la partie de raccordement inférieure (13w), qui sont raccordées entre elles via la partie de raccordement verticale (10b), est déterminé comme étant un angle aigu.

2. Structure selon la revendication 1,
dans laquelle la partie de surface plate (11ws) de la partie de raccordement supérieure (11w) est formée vers le bas vers la partie de raccordement verticale (10b), et
dans laquelle la partie de surface plate (13ws) de la partie de raccordement inférieure (13w) est configurée pour être amenée en contact avec une extrémité inférieure de la partie de raccordement supérieure (11w).

3. Structure selon la revendication 1 ou 2,
dans laquelle la partie de raccordement supérieure (11w) du capot supérieur (10u) comprend :
la partie de surface plate (11ws) s'étendant de manière oblique et vers le haut vers une direction inférieure de largeur de véhicule ; une partie inclinée (11ds) s'étendant de manière oblique et vers le bas vers la selle de passager (7r) via une crête (11ra) ; et une partie pliée (11ib) s'étendant vers le haut au-dessous d'une partie périphérique externe (7rb) de la selle de passager (7r).

4. Structure selon l'une quelconque des revendications 1 à 3,
dans laquelle un garde-boue arrière (42) est supporté par les bâtis de selle gauche et droit (2c) d'une manière verrouillée afin de former une partie inférieure (42b) de l'espace de rangement (SP),
dans laquelle la partie inférieure (42b) est disposée afin de recouvrir une roue arrière (RW) de dessus en face du capot inférieur (10d), et
dans laquelle le capot arrière (10) est supporté par le garde-boue arrière (42).

5. Structure selon la revendication 4,
dans laquelle le capot inférieur (10d) forme un espace inférieur de garde-boue (USP) au-dessous de la partie inférieure (42b) du garde-boue arrière (42), et
dans laquelle un régulateur (60) est disposé dans l'espace inférieur de garde-boue (USP).
